# EUROPEAN PATENT APPLICATION

(11) **EP 4 837 692 A1**
(43) Date of publication of application: **11.11.2026**
(21) Application number: 25816065.4
(22) Date of filing: 21.05.2025
(51) Int. Cl.: B23K 26/362, B23K 26/0622, B23K 26/382, B23K 26/064, B23K 26/14, B23K 26/70, B23K 26/361, B23K 101/40, B23K 101/42

(54) **METHOD FOR DIVIDING GLASS SUBSTRATE USING LASER**

(30) Priority: 31.05.2024 KR 20240071642; 20.05.2025 KR 20250065267
(71) Applicant: Philoptics Co., Ltd., Osan-si, Gyeonggi-do 18102 (KR)
(72) Inventor: SHIM, Sang-Won, Osan-si Gyeonggi-do 18102 (KR); KIM, Tae-Woo, Osan-si Gyeonggi-do 18102 (KR); KIM, Jong-Ho, Osan-si Gyeonggi-do 18102 (KR); CHOI, Jin-Ho, Osan-si Gyeonggi-do 18102 (KR); CHO, Yu-Hyun, Osan-si Gyeonggi-do 18102 (KR)
(74) Representative: EDP Patent Attorneys B.V.
(86) International application number: PCT/KR2025/006862
(87) International publication number: WO 2025/249823

(57) **Abstract**

According to the present invention, a glass substrate dividing method divides a glass substrate including a glass core, an upper laminate, and a lower laminate into a plurality of units. The glass substrate dividing method comprises: a laminate removing step of removing each of the upper laminate and the lower laminate of an area to be divided along a predetermined line using a laser; a laser drilling step of drilling the glass core along the predetermined line using the laser; and a physical or laser braking step of physically dividing the glass substrate on which the drilling step has been performed into a plurality of units.

## Description

### Field of the Invention

The present disclosure relates to a method of dividing a glass substrate into a plurality of units. The glass substrate may include an interposer substrate and a core substrate.

In particular, the present disclosure relates to a method of dividing the glass substrate into a plurality of units using a laser.

### Description of the Related Art

A glass substrate, e.g., a core substrate and an interposer substrate refer to a substrate having opposite surfaces on which a plurality of layers are stacked. The glass substrate is used for a high-performance semiconductor packaging process. The glass substrate may significantly contribute to performance improvement of artificial intelligence (AI) semiconductors due to excellent data transmission speed and power efficiency.

A traditional method of dividing the glass substrate includes a mechanical processing operation and a breaking operation.

In the mechanical processing operation, the plurality of layers formed on the opposite surfaces of the glass substrate are removed using a wheel or a blade to form a groove on top and bottom surfaces of the glass substrate. In the breaking operation, the glass substrate is cut mechanically or using a laser from the groove formed by the mechanical processing. In this way, the glass substrate is divided into a plurality of units.

However, in the method of dividing the glass substrate according to a related art, a crack may occur on a surface of or inside a glass core when the glass substrate is mechanically processed using a mechanical wheel or blade. Due to such a crack, there is a high possibility of a defect, called a SeWaRe defect, in which the glass substrate is split horizontally after the division.

### SUMMARY OF THE INVENTION

The present disclosure aims to provide a method of dividing a glass substrate by which a SeWaRe defect may be suppressed.

In particular, the present disclosure aims to provide a method of dividing a glass substrate by which at least two laser processes are provided before a breaking process to suppress a SeWaRe defect, efficiently perform the breaking process, and minimize an influence on an element in a breaking operation.

The problem that the present disclosure aims to solve is not limited to the problems mentioned above, and other problems and advantages of the disclosure that are not mentioned can be understood through the following description and may be understood more clearly by the examples of the present disclosure. In addition, it will be appreciated that the problems and advantages to be solved by the present disclosure may be realized by means and combinations thereof indicated in the claims.

According to an embodiment of the present disclosure, a method of dividing, into a plurality of units, a glass substrate including a glass core, an upper stack stacked on a top surface of the glass core, and a lower stack stacked on a bottom surface of the glass core, the method including a stack removal operation of removing an upper stack and a lower stack of a division target region along a predetermined line by using a laser, a laser perforation operation of perforating the glass core along the predetermined line by using the laser, and a physical or laser breaking operation of dividing the glass substrate on which the perforation operation is performed, into the plurality of units by using a physical or laser method.

The stack removal operation may be performed such that the glass core is not laser-etched or an etch depth from the top surface and/or the bottom surface of the glass core is 1 µm or less.

The stack removal operation may be performed using a laser using a wavelength of 1064 nm or less, e.g., 257 nm to 1064 nm and a pulse width of 100 ns or less, e.g., 100 fs to 100 ns.

In the stack removal operation, the laser may be emitted from an optical system operable in two axes with one or more mirrors, and the stage on which the glass substrate is arranged may operate in an X/Y/T/Z axis.

In the laser perforation operation, a laser having a wavelength of 515 nm to 1064 nm and a pulse width of 100 fs to 100 ps may be used.

In the laser perforation operation, the laser may be emitted from a filamentation or Bessel beam optical system.

The physical or laser breaking operation may be performed using a physical method of tilting and dividing the glass substrate passing through the laser perforation operation.

The physical or laser breaking operation may be performed by using a laser method of applying heat to a surface of the glass core of the glass substrate passing through the laser perforation operation using a laser and dividing the glass substrate while cooling the glass core with a cooling fluid. The laser breaking operation may be performed using a continuous wave (CW) laser having a wavelength of 200 nm to 10900 nm and a pulse width of 100 ns to 100 fs.

A thickness of the glass core may be 0.03 mm to 3 mm.

According to another embodiment of the present disclosure, a method of dividing, into a plurality of units, a glass substrate including a glass core, an upper stack stacked on a top surface of the glass core, and a lower stack stacked on a bottom surface of the glass core, includes a stack removal operation of removing an upper stack and a lower stack of a division target region along a predetermined line by using a laser, a laser perforation operation of perforating the glass core along the predetermined line by using the laser, a physical or laser breaking operation of dividing the glass substrate on which the perforation operation is performed, into the plurality of units by using a physical or laser method, and a chamfering operation of processing a corner of a glass core of a divided unit, by using a laser.

The stack removal operation may be performed such that the glass core is not laser-etched or an etch depth from the top surface and/or the bottom surface of the glass core is 1 µm or less.

The stack removal operation may be performed using a laser using a wavelength of 257 nm to 1064 nm and a pulse width of 100 fs to 100 ns.

In the stack removal operation, the laser may be emitted from an optical system operable in two axes with one or more mirrors, and the stage on which the glass substrate is arranged may operate in an X/Y/T/Z axis.

In the laser perforation operation, a laser having a wavelength of 515 nm to 1064 nm and a pulse width of 100 fs to 100 ps may be used.

In the laser perforation operation, the laser may be emitted from a filamentation or Bessel beam optical system.

The physical or laser breaking operation may be performed using a physical method of tilting and dividing the glass substrate passing through the laser perforation operation.

The physical or laser breaking operation may be performed by using a laser method of applying heat to a surface of the glass core of the glass substrate passing through the laser perforation operation using a laser and dividing the glass substrate while cooling the glass core with a cooling fluid. The laser breaking operation may be performed using a continuous wave (CW) laser having a wavelength of 200 nm to 10900 nm and a pulse width of 100 ns to 100 fs.

The chamfering operation may be performed using a grinding method.

The chamfering operation may be performed using a laser method. In this case, the chamfering operation may be performed using a laser having a wavelength of 265 nm to 10900 nm and a pulse width of 100 fs to 100 ps.

A thickness of the glass core may be 0.03 mm to 3 mm.

According to another embodiment of the present disclosure, a method of dividing, into a plurality of units, a glass substrate including a glass core, an upper stack stacked on a top surface of the glass core, and a lower stack stacked on a bottom surface of the glass core, includes a stack removal operation of removing an upper stack and a lower stack of a division target region along a predetermined line by using a laser, a laser perforation operation of perforating the glass core along the predetermined line by using the laser, a chamfering operation of processing a corner of a glass core of a unit to be divided, by using a laser, and a physical or laser breaking operation of dividing the glass substrate on which the perforation operation and the chamfering operation are performed, into the plurality of units by using a physical or laser method.

The stack removal operation may be performed such that the glass core is not laser-etched or an etch depth from the top surface and/or the bottom surface of the glass core is 1 µm or less.

The stack removal operation may be performed using a laser using a wavelength of 257 nm to 1064 nm and a pulse width of 100 fs to 100 ns.

In the stack removal operation, the laser may be emitted from an optical system operable in two axes with one or more mirrors, and the stage on which the glass substrate is arranged may operate in the X/Y/T/Z axis.

In the laser perforation operation, a laser having a wavelength of 515 nm to 1064 nm and a pulse width of 100 fs to 100 ps may be used.

In the laser perforation operation, the laser may be emitted from a filamentation or Bessel beam optical system.

The chamfering operation may be performed using a laser method. In this case, the chamfering operation may be performed using a laser having a wavelength of 265 nm to 355 nm and a pulse width of 100 fs to 100 ps.

The physical or laser breaking operation may be performed using a physical method of tilting and dividing the glass substrate passing through the laser perforation operation and the chamfering operation.

The physical or laser breaking operation may be performed by using a laser method of applying heat to a surface of the glass substrate passing through the laser perforation operation and the chamfering operation using a laser and dividing the glass substrate while cooling the glass core with a cooling fluid.

A thickness of the glass core may be 0.03 mm to 3 mm.

A method of dividing a glass substrate according to the present disclosure may suppress a SeWaRe defect by performing stack removal and laser perforation using a laser before a breaking process and efficiently perform the breaking process by forming a series of perforation lines.

Moreover, the method of dividing the glass substrate according to the present disclosure may minimize an influence upon an element in breaking by performing the breaking operation mechanically or using a laser. A chemical breaking method may provide a better strength quality, but a liquid used in chemical breaking may contaminate a substrate surface may require a process of attaching a protective film, a masking film, etc. An interposer substrate may be broken while being moved due to excessively thin glass. Physical or laser breaking may be applied regardless of a substrate thickness.

Moreover, the method of dividing the glass substrate according to the present disclosure may remove a microcrack of an individual unit by performing a chamfering operation with respect to a corner of a glass core, thereby further improving efficiency to suppress the SeWaRe defect. A chamfering process may enable tilting with a smaller force, e.g., in a physical breaking method.

Furthermore, the method of dividing the glass substrate according to the present disclosure may be applied to a glass core of various thicknesses of 0.03 mm to 3 mm.

In addition to the effects described above, specific effects of the present disclosure will be described below together with specific matters for carrying out the present disclosure.

### BRIEF DESCRIPTION OF THE DRAWINGS

FIG. 1 schematically shows a glass substrate in which stacks are stacked on and under a glass core;
FIG. 2 schematically shows a method of dividing a glass substrate according to a related art;
FIG. 3 schematically shows an example in which a SeWaRe defect occurs after division;
FIG. 4A is a flowchart schematically showing a method of dividing a glass substrate, according to an embodiment of the present disclosure;
FIG. 4B schematically shows each operation of FIG. 4A;
FIG. 5 schematically shows an example of a stack removal operation;
FIG. 6 schematically shows an example of a laser optical system and stage used in a stack removal operation;
FIG. 7 schematically shows a laser perforation operation;
FIG. 8 schematically shows an example in which a laser perforation operation is performed along a division line;
FIG. 9 schematically shows physical breaking in (a) and laser breaking in (b);
FIG. 10A is a flowchart schematically showing a method of dividing a glass substrate, according to another embodiment of the present disclosure;
FIG. 10B schematically shows each operation of FIG. 10A;
FIG. 11 schematically shows grinding chamfering in (a) and laser chamfering in (b);
FIG. 12A is a flowchart schematically showing a method of dividing a glass substrate, according to another embodiment of the present disclosure; and
FIG. 12B schematically shows each operation of FIG. 12A.

### <Description of Reference Numerals>

100 : Glass substrate
110: Glass core
120a: Upper stack
120b: Lower stack
410, 710, 1010, 1210 : Perforation
610: Laser optical system
620: Stage
910: Grinder
1020, 1220: Chamfered surface

### DETAILED DESCRIPTION OF THE INVENTION

Advantages and features of the present disclosure, and a method of achieving them will be apparent with reference to the embodiments described in detail in conjunction with the drawings. However, the present disclosure is not limited to embodiments disclosed below, but may be implemented in various different forms, and the present embodiment is provided only to make the disclosure of the present disclosure complete and to fully inform those of ordinary skill in the art to which the present disclosure pertains, and the present disclosure is defined by the scope of the claims. Throughout the specification, identical reference numerals refer to identical components.

In the drawings, to clearly describe the present disclosure, parts unrelated to the description may be omitted, and the same reference numerals may be used for the same or similar components throughout the specification. In addition, as the size and thickness of each component shown in the drawings are arbitrarily shown for convenience of description, the disclosure is not necessarily limited to the illustration.

Throughout the specification, when any portion is "connected" to another portion, it may include not only a case where they are "directly connected", but also a case where they are "indirectly connected" with another member therebetween. In case that a portion is referred to as "comprises" a component, the portion may not exclude another component but may further include another component unless stated otherwise.

Herein, "front" and "rear" are named based on a traveling direction of a beam, and a direction approaching a workpiece is defined as "rear."

Hereinafter, a method of dividing a glass substrate using a laser according to a preferred embodiment of the present disclosure will be described in detail with reference to the attached drawings.

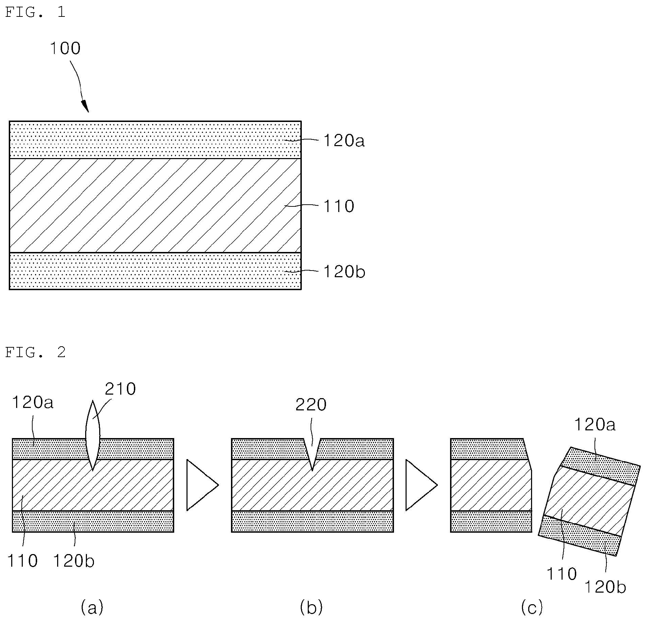

FIG. 1 schematically shows a glass substrate in which stacks are stacked on and under a glass core.

A glass substrate 100 may include an interposer substrate and a core substrate.

The glass substrate 100 may include a glass core 110, an upper stack 120a stacked on a top surface of the glass core 110, and a lower stack 120b stacked on a bottom surface of the glass core 110.

The upper stack 120a and/or the lower stack 120b arranged on opposite surfaces of the glass core 110 of the glass substrate 100 may be divided into a plurality of element units and an outer edge of each element unit, and a specific position of the outer edge between element units may be subject to division. One or more via holes may be included in the glass core 110 to electrically connect the upper stack 120a to the lower stack 120b.

A thickness of the glass core 110 that may be used in the method of dividing the glass substrate using the laser according to the present disclosure may be various in a range of 0.03 mm to 3 mm.

The upper stack 120a and/or the lower stack 120b may include at least one layer. The layer included in the upper stack 120a and the lower stack 120b may generally include a polymer, an Ajinomoto build-up film, a silicon nitride, a solder resist (SR), etc.

FIG. 2 schematically shows a method of dividing a glass substrate according to a related art.

Referring to FIG. 2, a method of dividing a glass substrate according to a related art may include a mechanical processing operation and a breaking operation.

Referring to (a) and (b) of FIG. 2, in the mechanical processing operation, the upper stack 120a formed on the top surface of the glass core 110 may be removed using the wheel or blade 210 to form a groove 220 in the top surface of the glass core 110. In the breaking operation, the glass substrate may be cut mechanically, chemically, or using a laser from the groove 220 formed by the mechanical processing. In this way, the glass substrate is divided into a plurality of units.

However, in the method of dividing the glass substrate according to a related art, a crack may occur on a surface of or inside the glass core 110 when the glass substrate is mechanically processed using the mechanical wheel or blade 210.

Due to such a crack, there is a high possibility of a defect, called a SeWaRe defect, in which the glass core is split horizontally after the division.

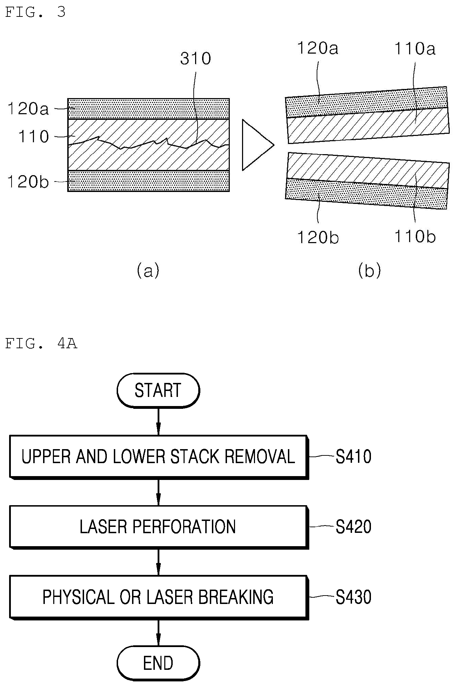

FIG. 3 schematically shows an example in which a SeWaRe defect occurs after division.

Referring to (a) of FIG. 3, a crack 310 is formed in a horizontal direction of the glass core 110. The crack 310 may mainly occur when the glass substrate is mechanically processed using a mechanical wheel or blade as described above. Due to the crack 310, as in an example shown in (b) of FIG. 3, the divided glass substrate may crack horizontally. Such a defect, i.e., the SeWaRe defect may have a negative influence upon an element manufacturing yield, element operation reliability, etc., and thus needs to be fully suppressed.

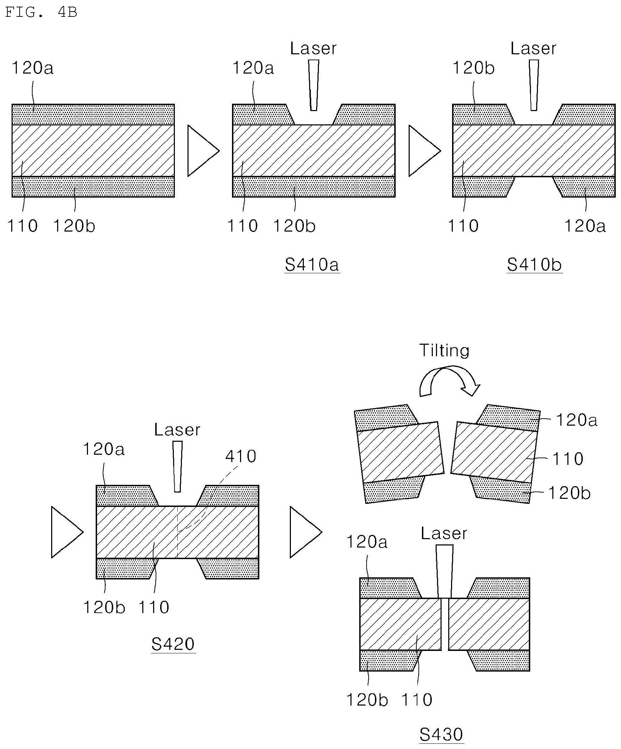

FIG. 4A is a flowchart schematically showing a method of dividing a glass substrate, according to an embodiment of the present disclosure. FIG. 4B schematically shows each operation of FIG. 4A.

Referring to FIGS. 4A and 4B, the method of dividing the glass substrate may include upper and lower stack removal operation S410, laser perforation operation S420, and physical or laser breaking operation S430.

In the present disclosure, a method of dividing a glass substrate into a plurality of units is provided in which the glass substrate includes the glass core 110, the upper stack 120a stacked on the top surface of the glass core 110, and the lower stack 120b stacked on the bottom surface of the glass core 110.

In stack removal operation S410, an upper stack and a lower stack on a division target region may be respectively removed, using a laser, along a predetermined line when viewed from top. For example, as in an example shown in FIG. 4B, after the upper stack 120a is removed first in operation S410a, the lower stack 120b may be removed in operation S410b, or vice versa.

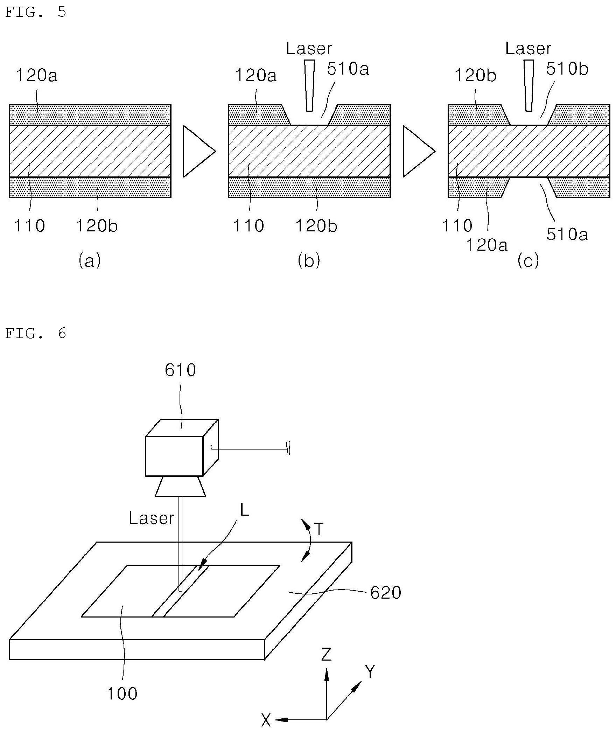

FIG. 5 schematically shows an example of a stack removal operation. As in an example shown in FIG. 5, the upper stack 120a may be removed using a laser along a predetermined line, thereby forming an upper glass core exposure 510a. Likewise, the lower stack 120b may be removed using a laser along a predetermined line, thereby forming a lower glass core exposure 510b. Stack removal and laser perforation may be performed in a single process, but in this case, impurity contamination, etc., may occur in laser perforation. However, by removing upper and lower stacks using a laser as in the present disclosure, the top surface and the bottom surface of the glass core 110 may be first exposed, thereby suppressing impurity retention, etc., in subsequent laser perforation operation S420.

Stack removal operation S410 may be performed such that the glass core is hardly affected by the laser, i.e., the glass core is not damaged. In this way, a protective effect against a microcrack, i.e., suppression of occurrence or expansion of the microcrack may be obtained. For example, stack removal operation S410 may be performed such that the glass core 110 is not laser-etched or an etch depth from the top surface and/or the bottom surface of the glass core 110 is 1 µm or less.

To this end, stack removal operation S410 may be performed using a laser having a wavelength of 1064 nm or less, specifically, 257 nm to 1064 nm, and a pulse width of 100 ns or less, specifically, 100 fs to 100 ns. When the wavelength of the laser used in the stack removal operation exceeds 1064 nm, an absorbance on the glass surface may increase, causing a damage to the surface and thus resulting in a crack. Moreover, when the pulse width of the laser used in the stack removal operation exceeds 100 ns, a large heat affected zone (HAZ) of a polymer to be removed occurs, resulting in a unit defect.

FIG. 6 schematically shows an example of a laser optical system and a stage used in a stack removal operation.

In stack removal operation S410, as in an example shown in FIG. 6, a laser may be emitted from a laser optical system 610 operable in two axes with one or more mirrors. A stage 620 on which the glass substrate is arranged may operate in an X/Y/T/Z axis. The stage 620 may move along the X axis, the Y axis, and the Z axis, and, for example, may turn along a T axis that is a horizontal axis. Due to such configurations of the laser optical system 610 and the stage 620, even when the thicknesses of the upper and lower stacks are different from each other, the upper and lower stacks may be removed stably to a predetermined width along a predetermined division line L.

FIG. 6 shows an example in which the stack of the glass substrate 100 is removed along the predetermined division line L corresponding to the Y axis.

Next, in laser perforation operation S420, a perforation 410 may be formed in the glass core along the predetermined line by using a laser.

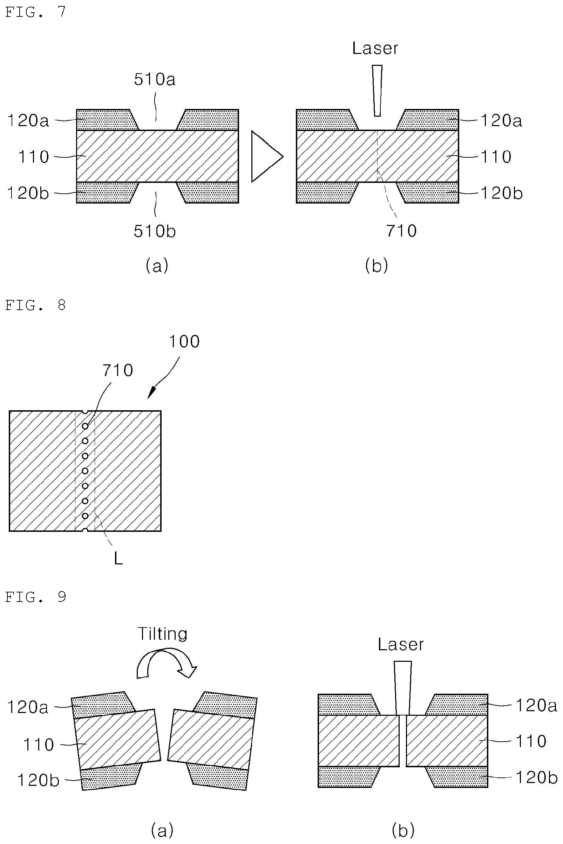

FIG. 7 schematically shows a laser perforation operation. FIG. 8 schematically shows an example in which a laser perforation operation is performed along a division line. As in an example shown in FIG. 7, a laser may be irradiated while the glass core 110 is exposed by removal of the upper stack 120a and the lower stack 120b, thereby forming a perforation 710 in the thickness direction of the glass core 110 of the glass substrate 100. Along the division line L, a plurality of perforations 710 may be formed.

In the laser perforation operation, a laser having a wavelength of 515 nm to 1064 nm and a pulse width of 100 fs to 100 ps may be used. When the wavelength of the laser used in the laser perforation operation is less than 515 nm, a problem may occur in processing due to an increase in glass absorbance. When the pulse width of the laser used in the laser perforation operation exceeds 100 ps, many cracks may occur inside or outside the glass. To this end, in the laser perforation operation, the laser may be emitted from a filamentation or Bessel beam optical system.

In physical or laser breaking operation S430, the glass substrate on which the perforation operation is performed may be divided into a plurality of units using a physical or laser method.

Generally, breaking may be performed using a chemical etching method. However, the chemical etching method may affect element operation or stability as an element etchant permeates. To apply the chemical etching method, an additional process such as masking film attachment or protective film attachment may be required. Thus, in the present disclosure, by performing breaking using a physical or laser method, the problem of the chemical etching method may be solved.

As strength may be weakened along the division line by the laser perforation operation, a subsequent physical or laser breaking operation may be easily performed.

FIG. 9 schematically shows physical (tilting) breaking in (a) and laser breaking in (b).

Physical or laser breaking operation S430 may be performed using a physical method such as a tilting method shown in (a) of FIG. 9. When tilting is performed in a state of holding units subject to division, the glass substrate may be broken into units along the previously formed perforations.

Physical or laser breaking operation S430 may also be performed using a laser method as in an example shown in (b) of FIG. 9. For example, physical or laser breaking may be performed by applying heat to the surface of the glass core of the glass substrate passing through the laser perforation operation using a laser that may be absorbed well on the glass surface and performing division while cooling the glass core with a cooling fluid such as air, gas, water, etc. The laser used in laser breaking may be preferably a laser that may be absorbed well on the glass surface, and for example, a CO2 laser may be used.

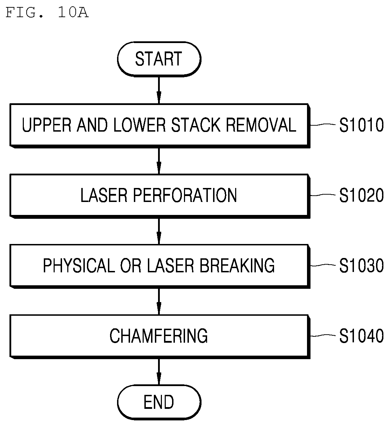

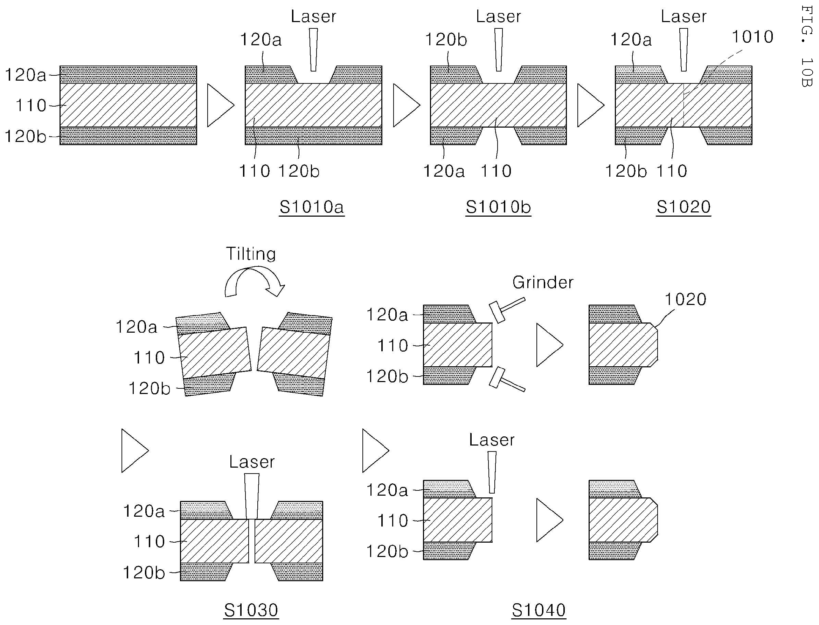

FIG. 10A is a flowchart schematically showing a method of dividing a glass substrate, according to another embodiment of the present disclosure. FIG. 10B schematically shows each operation of FIG. 10A.

The method of dividing the glass substrate, shown in FIG. 10A, may include upper and lower stack removal operation S1010, laser perforation operation S1020, physical or laser breaking operation S1030, and chamfering operation S1040.

In upper and lower stack removal operation S1010, the upper stack 120a stacked on the glass core 110 of a division target region and the lower stack 120b stacked under the glass core 110 may be removed along a predetermined line. In FIG. 10B, after the upper stack 120a is removed using a laser in operation S1010a, the lower stack 120b may be removed using a laser in operation S1010b, but the converse may be possible.

The stack removal operation may be performed such that the glass core 110 is not laser-etched or an etch depth from the top surface and/or the bottom surface of the glass core 110 is 1 µm or less. The stack removal operation may be performed using a laser having a wavelength of 1064 nm or less and a pulse width of 100 ns or less. In the stack removal operation, the laser may be emitted from an optical system operable in two axes with one or more mirrors, and the stage on which the glass substrate is arranged may operate in the X/Y/T/Z axis.

Next, in laser perforation operation S1020, a perforation 1010 may be formed in the glass core 110 along the predetermined line by using a laser. In the laser perforation operation, a laser having a wavelength of 515 nm to 1064 nm and a pulse width of 100 fs to 100 ps may be used. In the laser perforation operation, the laser may be emitted from a filamentation or Bessel beam optical system.

In physical or laser breaking operation S1030, physical or laser breaking may be performed in which the glass substrate on which the perforation operation is performed is divided into a plurality of units using a physical or laser method.

The physical or laser breaking operation may be performed using a physical method of tilting and dividing the glass substrate passing through the laser perforation operation. In another example, the physical or laser breaking operation may be performed using a laser method of applying heat to the surface of the glass core using a laser that may be absorbed well on the glass surface on the glass substrate passing through the laser perforation operation and dividing the glass substrate while cooling the glass core with a cooling fluid.

Upper and lower stack removal operation S1010, laser perforation operation S1020, and physical or laser breaking operation S1030, shown in FIGS. 10A and 10B, may be performed substantially in the same manner as upper and lower stack removal operation S410, laser perforation operation S420, and physical or laser breaking operation S430, shown in FIGS. 4A and 4B.

Next, in chamfering operation S1040, after the physical or laser breaking operation, a corner of the glass core of the divided unit may be processed.

Chamfering operation S1040 may be performed to remove a chip generated after physical or laser breaking and chamfer a sharp corner. A shape of a chamfered surface 1020 may have an angle or may be a C shape.

In the present disclosure, by upper and lower stack removal operation S1010, the chamfering process may be performed for a corner of the glass core in chamfering operation S1040, thereby removing a microcrack on a corner portion of the glass core and thus improving the effect of suppressing a SeWaRe defect.

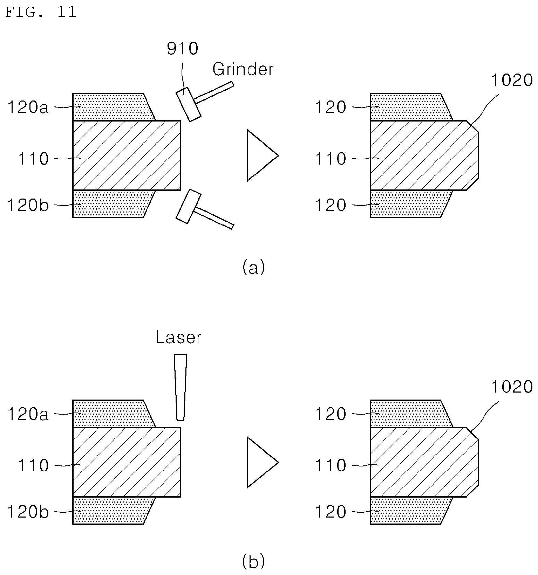

FIG. 11 schematically shows grinding chamfering in (a) and laser chamfering in (b).

Chamfering may be performed using a grinding method using a grinder 910 as in an example shown in (a) of FIG. 11.

In another example, chamfering may be performed using a laser method as in an example shown in (b) of FIG. 11. In this case, the chamfering operation may be performed using a laser having a wavelength of 265 nm to 355 nm and a pulse width of 100 fs to 100 ps to minimize heat for the glass core. When the wavelength of the laser used in the chamfering operation exceeds 355 nm, a glass absorbance may be reduced, causing a problem in the chamfering process. When the pulse width of the laser used in the chamfering operation exceeds 100 ps, much heat may be generated in processing, increasing a microcrack.

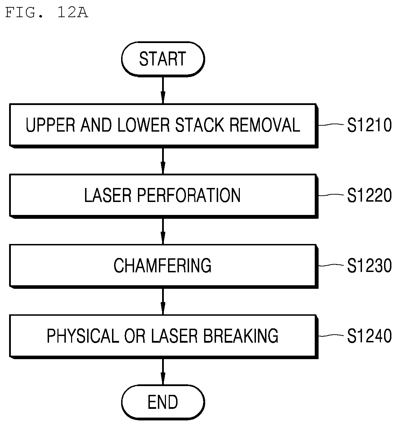

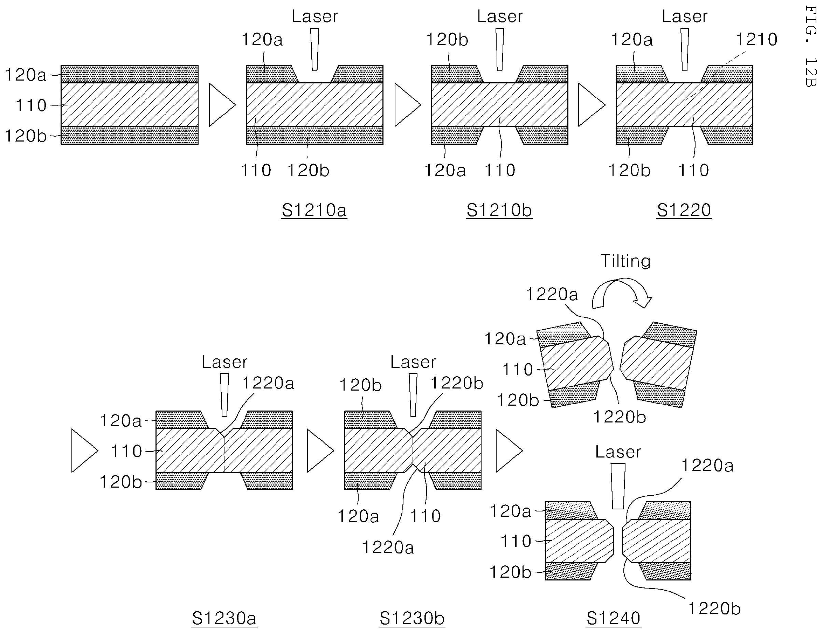

FIG. 12A is a flowchart schematically showing a method of dividing a glass substrate, according to another embodiment of the present disclosure. FIG. 12B schematically shows each operation of FIG. 12A.

The method of dividing the glass substrate shown in FIGS. 12A and 12B may include upper and lower stack removal operation S1210, laser perforation operation S1220, chamfering operation S1230, and physical or laser breaking operation S1240.

In upper and lower stack removal operation S1210, the upper stack 120a stacked on the glass core 110 of a division target region and the lower stack 120b stacked under the glass core 110 may be removed along a predetermined line. In FIG. 12B, after the upper stack 120a is removed using a laser in operation S1210a, the lower stack 120b may be removed using a laser in operation S1210b, but the converse may be possible.

Stack removal operation S1210 may be performed such that the glass core 110 is not laser-etched or an etch depth from the top surface and/or the bottom surface of the glass core 110 is 1 µm or less. Stack removal operation S1210 may be performed using a laser having a wavelength of 1064 nm or less and a pulse width of 100 ns or less. In the stack removal operation S1210, the laser may be emitted from an optical system operable in two axes with one or more mirrors, and the stage on which the glass substrate is arranged may operate in the X/Y/T/Z axis.

Next, in laser perforation operation S1220, a perforation 1210 may be formed in the glass core 110 along the predetermined line by using a laser. In the laser perforation operation, a laser having a wavelength of 515 nm to 1064 nm and a pulse width of 100 fs to 100 ps may be used. In the laser perforation operation S1220, the laser may be emitted from a filamentation or Bessel beam optical system.

In physical or laser breaking operation S1240, physical or laser breaking may be performed in which the glass substrate on which perforation operation S1220 and chamfering operation S1230 are performed is divided into a plurality of units using a physical or laser method.

Physical or laser breaking operation S1240 may be performed using a physical method of tilting and dividing the glass substrate. In another example, the physical or laser breaking operation S1240 may be performed using a laser method of applying heat to the glass core surface of the glass substrate using a laser and dividing the glass substrate while cooling the glass core with a cooling fluid.

Upper and lower stack removal operation S1210, laser perforation operation S1220, and physical or laser breaking operation S1240, shown in FIGS. 12A and 12B, may be performed substantially in the same manner as upper and lower stack removal operation S410, laser perforation operation S420, and physical or laser breaking operation S430, shown in FIGS. 4A and 4B, or upper and lower stack removal operation S1010, laser perforation operation S1020, and physical or laser breaking operation S1030, shown in FIGS. 10A and 10B described above.

Meanwhile, in the method of dividing the glass substrate, shown in FIGS. 12A and 12B, unlike the method shown in FIGS. 10A and 10B, after chamfering operation S1230 is performed, physical or laser breaking operation S1240 may be performed.

In the method of dividing the glass substrate, shown in FIGS. 12A and 12B, in chamfering operation S1230, a corner of the glass core of a unit to be divided may be processed using a laser.

Chamfering operation S1230 may be performed to chamfer a sharp corner. A shape of the chamfered surface 1220 may have an angle or may be a C shape.

The chamfering operation S1230 may be performed using a laser having a wavelength of 265 nm to 355 nm and a pulse width of 100 fs to 100 ps.

Meanwhile, in the method of dividing the glass substrate, shown in FIGS. 12A and 12B, the chamfering operation may be performed before the physical or laser breaking operation S1240, such that chamfering using a grinder may not be applied.

As described above, by performing stack removal and laser perforation using a laser before a breaking process according to the present disclosure, a SeWaRe defect may be suppressed and a breaking process may be efficiently performed by forming a series of perforation lines, and an influence upon an element may be minimized in breaking by performing physical or laser breaking.

Although the present disclosure has been described above with reference to embodiments thereof, various changes or modifications may be made by those of ordinary skill in the art in the technical field to which the present disclosure pertains. Such changes and modifications may be considered to belong to the present disclosure as long as they do not depart from the scope of the technical idea provided by the present disclosure. Therefore, the scope of the present disclosure should be determined by the claims set forth below.

## Claims

1. A method of dividing, into a plurality of units, a glass substrate comprising a glass core, an upper stack stacked on a top surface of the glass core, and a lower stack stacked on a bottom surface of the glass core, the method comprising:
a stack removal operation of respectively removing the upper stack and the lower stack of a division target region along a predetermined line by using a laser;
a laser perforation operation of perforating the glass core along the predetermined line by using a laser; and
a physical or laser breaking operation of dividing the glass substrate on which the perforation operation is performed into the plurality of units by using a physical or laser method.

2. A method of dividing, into a plurality of units, a glass substrate comprising a glass core, an upper stack stacked on a top surface of the glass core, and a lower stack stacked on a bottom surface of the glass core, the method comprising:
a stack removal operation of respectively removing the upper stack and the lower stack of a division target region along a predetermined line by using a laser;
a laser perforation operation of perforating the glass core along the predetermined line by using a laser;
a physical or laser breaking operation of dividing the glass substrate on which the perforation operation is performed into the plurality of units by using a physical or laser method; and
a chamfering operation of processing a corner of the glass core of a divided unit after the physical or laser breaking operation.

3. The method of claim 2, wherein the chamfering operation is performed using a grinding method.

4. The method of claim 2, wherein the chamfering operation is performed using a laser method.

5. The method of claim 4, wherein the chamfering operation is performed using a laser having a wavelength of 265 nm to 355 nm and a pulse width of 100 fs to 100 ps.

6. A method of dividing, into a plurality of units, a glass substrate comprising a glass core, an upper stack stacked on a top surface of the glass core, and a lower stack stacked on a bottom surface of the glass core, the method comprising:
a stack removal operation of respectively removing the upper stack and the lower stack of a division target region along a predetermined line by using a laser;
a laser perforation operation of perforating the glass core along the predetermined line by using a laser;
a chamfering operation of processing, by using a laser, a corner of the glass core of a unit to be divided; and
a physical or laser breaking operation of dividing the glass substrate on which the perforation operation and the chamfering operation are performed into the plurality of units by using a physical or laser method.

7. The method of claim 6, wherein the chamfering operation is performed using a laser having a wavelength of 265 nm to 355 nm and a pulse width of 100 fs to 100 ps.

8. The method of any one of claims 1 to 7, wherein the stack removal operation is performed such that the glass core is not laser-etched or an etch depth from the top surface and/or the bottom surface of the glass core is 1 µm or less.

9. The method of any one of claims 1 to 7, wherein the stack removal operation is performed using a laser having a wavelength of 257 nm to 1064 nm and a pulse width of 100 fs to 100 ns.

10. The method of any one of claims 1 to 7, wherein, in the stack removal operation, the laser is emitted from an optical system operable in two axes with one or more mirrors, and a stage on which the glass substrate is arranged operates in an X/Y/T/Z axis.

11. The method of any one of claims 1 to 7, wherein the laser perforation operation is performed using a laser having a wavelength of 515 nm to 1064 nm and a pulse width of 100 fs to 100 ps.

12. The method of any one of claims 1 to 7, wherein, in the laser perforation operation, the laser is emitted from a filamentation or Bessel beam optical system.

13. The method of any one of claims 1 to 7, wherein the physical or laser breaking operation is performed using a physical method of tilting and dividing the glass substrate.

14. The method of any one of claims 1 to 7, wherein the physical or laser breaking operation is performed using a laser method of applying heat to a surface of the glass core of the glass substrate using a laser absorbable on a glass surface and dividing the glass substrate while cooling the glass core with a cooling fluid.

15. The method of any one of claims 1 to 7, wherein a thickness of the glass core is 0.03 mm to 3 mm.
